Europäisches Patentamt

European Patent Office

Office européen des brevets

(19)

(11) Veröffentlichungsnummer: **0 348 402 B1**

## EUROPÄISCHE PATENTSCHRIFT

(12)

(45) Veröffentlichungstag der Patentschrift: **26.05.93**

(51) Int. Cl.⁵: **H04L 27/22**

(21) Anmeldenummer: **88901406.4**

(22) Anmeldetag: **16.01.88**

(86) Internationale Anmeldenummer:
**PCT/DE88/00021**

(87) Internationale Veröffentlichungsnummer:
**WO 88/07303 (22.09.88 88/21)**

(54) **TAKTPHASENDETEKTOR.**

(30) Priorität: **11.03.87 DE 3707763**

(43) Veröffentlichungstag der Anmeldung:
**03.01.90 Patentblatt 90/01**

(45) Bekanntmachung des Hinweises auf die
Patenterteilung:
**26.05.93 Patentblatt 93/21**

(84) Benannte Vertragsstaaten:
**AT CH FR GB IT LI SE**

(56) Entgegenhaltungen:

**Proceedings of the IEEE, Band 71, Nr. 6, Juni
1983, IEEE (New York, US); R.L. Bogusch et
al.: "Frequency−selective scintillation effects and decision feedback equalization in
high data−rate satellite links", Seiten
754−767**

(73) Patentinhaber: **ANT Nachrichtentechnik GmbH
Gerberstrasse 33
W−7150 Backnang(DE)**

(72) Erfinder: **HESPELT, Volker
Lichtensteinstrasse 44
W−7150 Backnang(DE)**
Erfinder: **ALBERTY, Thomas
Danziger Strasse 28
W−7150 Backnang(DE)**

**Beschreibung**

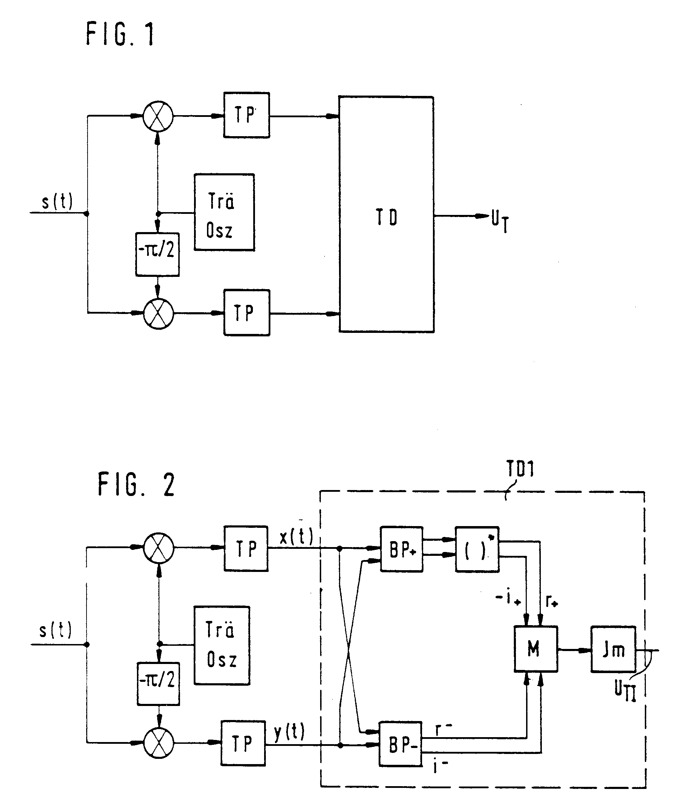

Die Erfindung bezieht sich auf einen Taktphasendetekor gemäß Oberbegriff des Anspruches 1. Solche Taktphasendetektoren (s. Fig. 1 und 2) sind bekannt, beispielsweise durch die weiter unten zitierten Aufsätze.

Bei der synchronen Datenübertragung ist es wesentlich, daß der Empfänger aus den Empfangsdaten den exakten Abtastzeitpunkt ableitet. Hierzu wird in einem Taktphasendetektor TD (Fig. 1, 2) durch nichtlineare Operationen ein Ausgangssignal $u_T$ erzeugt, dessen Grundschwingung der Taktfrequenz entspricht und aus dessen Nulldurchgängen der Abtastzeitpunkt abgeleitet wird. Die Taktschwingung wird mittels schmalbandiger Filterung in einem Bandpaß oder in einer Phasenregelschleife (PLL) von Störungen befreit.
Erfolgt die Übertragung im Trägerfrequenzbereich, so muß im Empfänger neben der Taktsynchronisation auch die Trägersynchronisation durchgeführt werden. Hier treten Akquisitionsprobleme auf, wenn der Trägerfrequenzoffset groß gegenüber der Bandbreite der Trägerregelschleife ist. Eine Möglichkeit, die Trägerregelschleife zu synchronisieren, besteht darin, zusätzlich zur Trägerregelschleife eine Frequenzregelschleife zu verwenden; hierzu wird auf die Patentanmeldung DE − A − 3707762 verwiesen.

Der Empfänger benötigt also neben der Phasenregelschleife zur Synchronisation der Trägerphase, auf die hier nicht näher eingegangen wird, einen Frequenzdetektor für die Frequenzregelschleife sowie einen Taktphasendetektor TD für die Taktregelung. Solche Taktphasendetektoren` für QPSK − Signale, sind in den Aufsätzen von Gardner "A BPSK/QPSK Timing − Error Detector for Sampled Receivers" IEEE Com. − 34, No. 5, Mai 1986, Seiten 423 − 429, /1/ und von Godard "Passband Timing Recovery in All − Digital Modem Receiver", IEEE Com. − 26, No. 5, Mai 1978, Seiten 517 − 523, /2/ beschrieben.

Der Erfindung lag die Aufgabe zugrunde, einen Taktphasendetektor der eingangs genannten Art anzugeben der mit wenig zusätzlichem Schaltungsaufwand in der Lage ist, gleichzeitig auch als Frequenzdetektor eingesetzt zu werden, wobei die Detektoren weitgehend unabhängig voneinander arbeiten und möglichst jitterfreie Ausgangssignale liefern sollen.

Die Lösung dieser Aufgabe erfolgt mit den kennzeichnenden Merkmalen des Anspruches 1.

Der erfindungsgemäße Taktphasendetektor weist die folgenden Vorteile auf, daß er mit geringem zusätzlichem Aufwand auch gleichzeitig als Frequenzdetektor eingesetzt werden kann, wobei der zusätzliche Schaltungsaufwand sich durch eine weitere Verknüpfungsschaltung ergibt, welche das gewünschte Steuersignal erzeugt. Die beiden Detektoren arbeiten weitgehend unabhängig voneinander und liefern sehr jitterarme Ausgangssignale. Die Akquisitionszeit wird durch den erfindungsgemäßen Taktphasendetektor stark reduziert.
Vorteilhafte Ausbildungen ergeben sich durch die Unteransprüche.

Durch geeignete Vorentzerrung vor der Bandpaßfilterung läßt sich der Jitteranteil sowohl im Phasendetektor als auch im Frequenzdetektor nahezu auf Null reduzieren. Die unabhängige Funktionsweise der beiden Detektoren besteht darin, daß der Frequenzdetektor unabhängig vom Taktphasenoffset ist und daß der Taktphasendetektor weitgehend unabhängig vom Frequenzoffset des demodulierten Signals ist; damit sind die Ausgangssignale der beiden Detektoren entkoppelt. Ein weiterer Vorteil liegt darin, daß sich kleine Laufzeiten in der Regelschleife ergeben, da die Detektoren, anstatt der Datenfilter nach Literaturzitat /1/, aufwandsarme Bandpässe und gegebenenfalls Vorentzerrer enthalten.
Außerdem besteht die Möglichkeit, daß bei einer digitalen Realisierung der Detektoren die Abtastfrequenz in den Bandpässen und gegebenenfalls in den Vorentzerrern unabhängig von derjenigen in den Datenfiltern gewählt werden kann. Üblicherweise wird jeweils ein ganzzahliges Vielfaches des Schrittakt − Kehrwertes verwendet.
Mittels einer dritten Verknüpfungsschaltung ist es möglich, daß ein komplexes Ausgangssignal zur Ansteuerung der Taktphasenregelung erzeugt werden kann, welche komplexe Steuergröße die Akquisitionszeit bei der Taktregelung noch wesentlich zu reduzieren in der Lage ist.

Es folgt nun die Beschreibung der Erfindung anhand der Figuren.
Die Figuren 1 bis 3 zeigen den Stand der Technik.
Die Figuren 1 und 2 zeigen ein Blockschaltbild eines Empfängerteils für die Demodulation des Empfangssignals mit Taktphasendetektor, wobei in Figur 2 letzterer detaillierter wiedergegeben ist.
Die Figur 3a zeigt einen aufwandsärmeren Taktphasendetektor, und in Figur 3b ist eine detaillierte Verknüpfungsschaltung angegeben.
Die Figur 4 gibt einen erfindungsgemäßen Taktphasendetektor mit kombiniertem Frequenzdetektor wieder, wobei in den Figuren 5a, b und c Verknüpfungsschaltungen für den Frequenzdetektor und den Taktphasendetektor detailliert wiedergegeben sind.
In Figur 6 schließlich ist ein erfindungsgemäßer Taktphasendetektor mit Vorentzerrung dargestellt, und in den Figuren 7a, b und c ist eine Integration von Vorentzerrung und Bandpaßfilterung bzw. eine komplexe Vorentzerrung illustriert.

In Figur 1 ist eine Demodulationsschaltung eines Empfängers gezeichnet wobei das Emp

fangssignal s(t) mit einem Trägersignal, das von einem Trägeroszillator erzeugt wird, einmal direkt multipliziert und zum anderen um $-\pi/2$ phasen-verschoben mulitpliziert wird, anschließend über Tiefpässe TP gefiltert und als In-Phase-Komponente x(t) und Quadraturkomponente y(t) des demodulierten Eingangssignals einem Taktphasendetektor TD als Eingangssignal zugeführt wird, welcher ein Steuersignal $u_T$ zur Ansteuerung einer Taktphasen-Stelleinrichtung für eine Abtasteinrichtung erzeugt. Dieses Ausgangssignal $u_T$ weist eine Grundschwingung auf, welche der Taktfrequenz entspricht. Die Nulldurchgänge dieser Grundschwingung werden nach weiterer Filterung zur Feststellung der Abtastzeitpunkte verwendet. So viel über die Auswertung der Steuerspannung $u_T$; weitere Informationen über die Taktregelung können den genannten Literaturstellen /1/ und /2/ entnommen werden.

In Figur 2 ist ein Taktphasendetektor TD1 als detaillierteres Blockschaltbild dargestellt, welcher in dem Literaturzitat /2/ beschrieben ist und eingesetzt wird, wenn anstelle des in /2/ verwendeten "Phase-Splitter"-Netzwerks die Demodulation eines QPSK-Signals durchgeführt wird.

Die Normalkomponente x(t) und die Quadraturkomponente y(t) des demodulierten Empfangssi-gnals z(t) = x(t) + jy(t) gelangen jeweils auf einen komplexen Bandpaß BP+ mit der Mittenfrequenz $f_M = f_{Nyq}$ und auf einen komplexen Bandpaß BP- mit der Mittenfrequenz $f_M = -f_{Nyq}$, wobei $f_{nyq}$ die Nyquistfrequenz mit $f_{Nyq} = 1/2T_S$ mit der Schritt-dauer $T_S$ der Sendesymbole ist. Das konjugiert komplexe Ausgangssignal des ersten Bandpasses BP+ mit dem Realteil r+ und dem Imaginärteil -i+ wird anschließend in einem Multiplizierer M mit dem Realteil r- und dem Imaginärteil i- des Ausgangssignals des zweiten Bandpasses BP- mulipliziert. Der Imaginärteil des Multiplizierer-Ausgangssignals stellt das Ausgangssignal $u_{TI}$ des Taktphasendetektors TD1 dar.

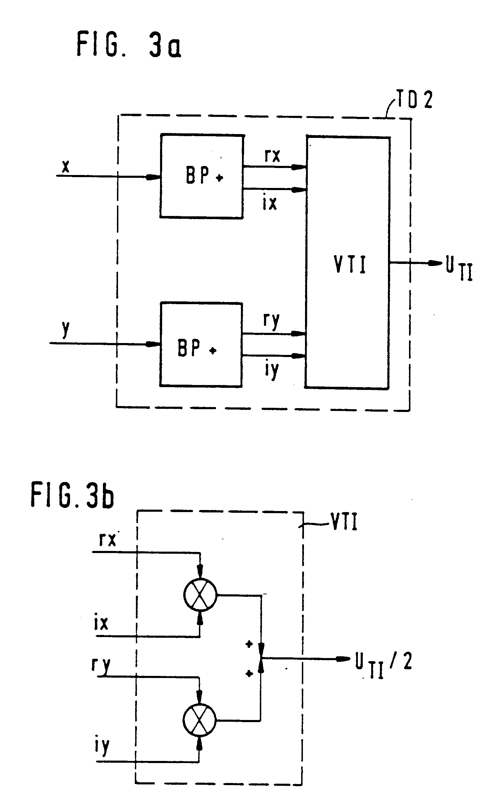

Die Figur 3 zeigt einen Taktphasendetektor, welcher gegenüber demjenigen der Figur 2 weniger Aufwand enthält. Er weist dieselbe Funktion auf wie der erstgenannte Phasendetektor TD1 und ist aus diesem entwickelt, indem die Symmetrien der beiden Bandpässe BP+ und BP- ausgenutzt werden. Anstelle dieser beiden symmetrischen Bandpässe werden nunmehr zwei gleiche Bandpässe BP+ verwendet, wobei dem einen der Realteil x und dem anderen der Imaginärteil y des demodulierten Empfangssignals zugeführt werden. Die beiden Bandpässe BP+ arbeiten mit der Mit-tenfrequenz $f_M = f_{Nyq}$ und erzeugen die komplexen Ausgangsgrößen rx + jix bzw. ry + jiy, welche im sich anschließenden Verknüpfungsbaustein VTI zum Steuersignal $u_{TI}$ verknüpft werden nach der Beziehung

$$u_{TI} = (rx \cdot ix + ry \cdot iy) \cdot 2,$$

welche Verknüpfung in der Figur 3b dargestellt ist.

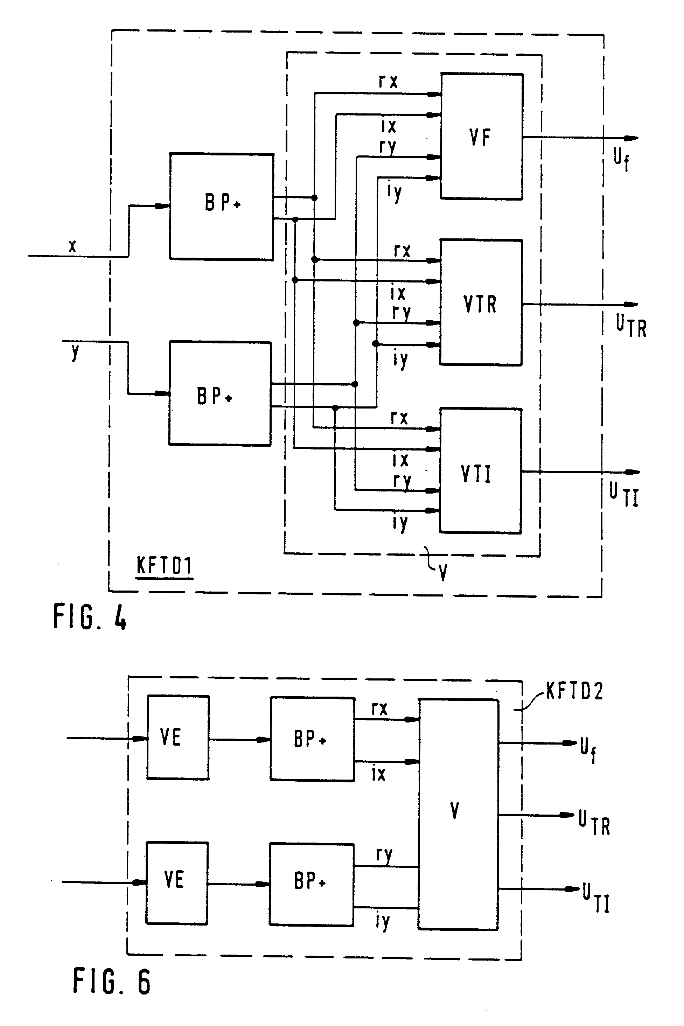

Die Figur 4 zeigt nun die erfindungsgemäße Kombination eines Taktphasendetektors mit einem Frequenzdetektor KFTD1, wobei dem Taktphasendetektor gemäß Figur 3a eine weitere Verknüpfungsschaltung VF hinzugefügt wurde, welcher ebenfalls die Realteile rx, ry und die Imaginärteile ix und iy der Ausgangssignale der beiden komplexen Bandpässe BP+ als Eingangssignale zugeführt werden. Die Ausgangsgröße $u_f$ der zusätzlichen Verknüpfungsschaltung VF ist ein Maß für den Frequenzoffset. Die Verknüpfungsschaltung VTI entspricht derjenigen aus Figur 3a bzw. 3b. Eine dritte Verknüpfungsschaltung VTR ist zugefügt, welche aus denselben Eingangssignalen eine weitere Steuerspannung $u_{TR}$ erzeugt, welche Ausgangsgröße $u_{TR}$ als Realteil eines komplexen Taktphosendetektor-Ausgangssignals $u_T = u_{TR} + ju_{TI}$ interpretiert werden kann. Eine Zusammenfassung dieser beiden Größen zu dem genannten komplexen Taktphasendetektor-Ausgangssignal $u_T$ führt zu wesentlichen Verbesserungen bei der Akquisition der Taktregelung.

Die genannten Detektor-Ausgangssignale $u_f$, $u_{TR}$ und $u_{TI}$ des Verknüpfungsbausteines V genügen den Beziehungen

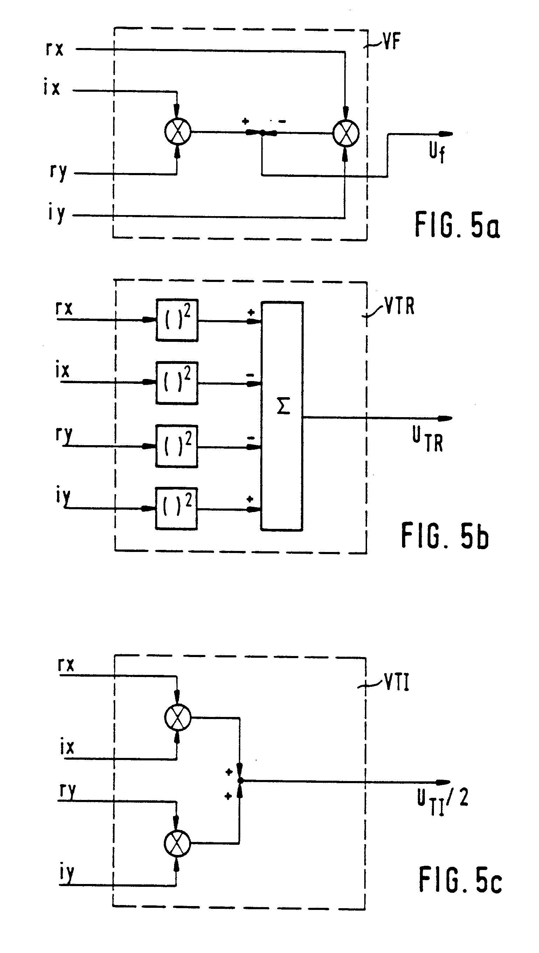

$$u_f = ry \cdot ix - rx \cdot iy, \qquad \text{s. Fig. 5a,}$$
$$u_{TR} = rx^2 - ix^2 - ry^2 + iy^2, \qquad \text{s. Fig. 5b und}$$
$$u_{TI} = (rx \cdot ix + ry \cdot iy) \cdot 2 \qquad \text{gemäß Fig. 5c.}$$

Es ist noch zu erwähnen, daß die Mittenfrequenz der Bandpässe BP+ gleich der Nyquistfrequenz ist und daß ihre Bandbreite in der Größenordnung der Breite der Nyquistflanke liegt oder auch etwas schmäler ist.

Durch eine geeignete Vorentzerrung der In-Phase- und Quadraturkomponente des demodulierten Empfangssignals kann der Patternjitter sowohl des Taktphasendetektors als auch des Frequenzdetektors total unterdrückt werden. Eine Vorentzerrung ist in der Literaturstelle /2/ beschrieben; es ist aber auch durch die Aufsätze von Franks und Bubrauski "Statistical Properties of Timing Jitter in a PAM Timing Recovery Scheme", IEEE Com.-22, No. 7, Juli 1974, Seiten 913 - 920 /3/ und "Nearly Optimum Prefiltering in Clock Recovery" von Andrea, Mengali und Moro in IEEE Com.-34, No. 11, Nov. 1986, Seiten 1081 - 1088 /4/ bekannt geworden, wie durch geeignete Vorentzerrung der Patternjitter im Ausgang des Taktphasendetektors reduziert werden kann.

Durch geeignete Auslegung der Vorentzerrer VE und der Bandpässe BP+ ist es nun möglich, sowohl die Bedingung für Jitterreduktion im Frequenzdetektor (siehe Patentanmeldung BK 87/11 (P . . . . . . . )) als auch die Bedingung für Jitterreduktion im Taktphasendetektor einzuhalten. Die erzielbare Jitterreduzierung ist von der Qualität der Entzerrung, d.h. von der Entzerrungsbandbreite und von der Abweichung vom idealen Verlauf abhängig und somit eine Frage des Aufwandes im Varentzrrers VE.

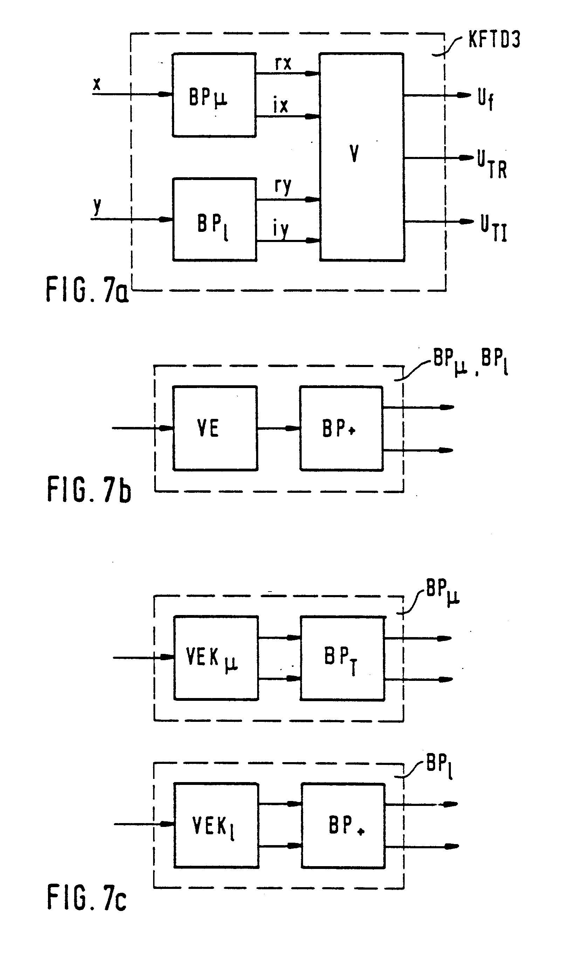

Die Figur 6 zeigt einen kombinierten Frequenz- und Taktphasendetektor (KFTD2), bei dem mittels Vorentzerrer VE sowohl der Patternjitter im Frequenzdetektor-Ausgangssignal als auch im Ausgangssignal des Taktphasendetektors reduziert wird.

Die Vorentzerrer können für reelle oder komplexe Vorentzerrung ausgelegt sein. Die Vorentzerrer lassen sich in beiden Ausführungen mit dem sich anschließenden Bandpaß BP+ zu einem einzigen komplexen Filter zusammenfassen. In Figur 7a ist eine sich dann ergebende Struktur des kombinierten Detektors dargestellt; die komplexen Bandpässe $BP_\mu$ und $BP_I$ entstehen durch Zusammenfassung einer reellen Vorentzerrung mit dem sich anschließenden Bandpaß BP+ gemäß Figur 7b oder aufgrund der Zusammenfassung der Reihenschaltung einer komplexen Vorentzerrung $VEK_\mu$ bzw. $VEK_I$ mit der sich anschließenden Bandpaßfilterung BP+ gemäß Figur 7c.

**Patentansprüche**

1.  Taktphasendetektor zur Taktsynchronisation in einem Empfänger für synchrone Datenübertragung, wobei dem Taktphasendetektor als demoduliertes Empfangssignal die tiefpaßgefilterte In-Phase-Komponente und Quadratur-Komponente eingegeben werden, in denen die Signalterme der doppelten Frequenz unterdrückt sind und die aus dem Produkt des Empfangssignals mit dem Ausgangssignal des Trägeroszillators entstanden sind und wobei das Ausgangssignal als Steuersignal $u_{TI}$ für den Taktgenerator dient und wobei der Taktphasendetektor zwei mit dem demodulierten Empfangssignal gespeisten Bandpässe (BP+) und eine Verknüpfungsschaltung (VTI) enthält, welche aus den komplexen Bandpaß-Ausgangssignalen das Steuersignal erzeugt, dadurch gekennzeichnet, daß eine zweite Verknüpfungsschaltung (VF) vorgesehen ist, durch die aus den komplexen Ausgangsgrößen der Bandpässe (BP+) ein Steuersignal $u_f$ zur Steuerung der Frequenz des Trägeroszillators erzeugt wird (Figur 4).

2.  Taktphasendetektor nach Anspruch 1, dadurch gekennzeichnet, daß vor den Bandpässen (BP+) jeweils ein Vorentzerrer (VE) vorgesehen ist, durch welchen das demodulierte Empfangssignal (x, y) vorentzerrt wird (Figur 6).

3.  Taktphasendetektor nach Anspruch 2, dadurch gekennzeichnet, daß die Vorentzerrer (VE) komplexe Ausgangssignale erzeugen (Figur 7c).

4.  Taktphasendetektor nach Anspruch 2 oder 3, dadurch gekennzeichnet, daß die Reihenschaltungen aus Vorentzerrer (VE) und nachfolgenden Bandpässen (BP+) jeweils durch ein einziges komplexes Filter ($BP_\mu$, $BP_I$) realisiert sind (Figur 7a).

5.  Taktphasendetektor nach einem der Ansprüche 1 bis 4, wobei die Bandpässe jeweils die Mittenfrequenz $f_M$ gleich der Nyquistfrequenz $f_{Nyq}$ aufweisen mit einem Frequenzbereich von ungefähr oder kleiner der Breite der Nyquistflanke, wobei die Nyquistfrequenz $f_{Nyq} = 1/2 T_S$ ist mit der Schrittdauer $T_S$ der Sendesymbole und wobei der eine Bandpaß (BP+) mit dem Realteil x(t) und der andere Bandpaß (BP+) mit dem Imaginärteil y(t) des demodulierten Empfangssignals gespeist werden, dadurch gekennzeichnet, daß die Verknüpfung der zweiten Verknüpfungsschaltung (VF) für die Frequenzsteuerung die Ausgangssignale rx, ix, ry und iy der Bandpässe (BP+) nach der Beziehung

    $$u_f = ry \cdot ix - rx \cdot iy$$

    zusammenfaßt (Figur 5a).

6.  Taktphasendetektor nach Anspruch 5, dadurch gekennzeichnet, daß die Verknüpfung der ersten Verknüpfungsschaltung (VTI) die Ausgangssignale rx, ix, ry und iy der Bandpässe (BP+) nach der Beziehung

    $$u_{TI} = (rx \cdot ix + ry \cdot iy) \cdot 2$$

    zusammenfaßt (Figur 5c).

7.  Taktphasendetektor nach einem der vorhergehenden Ansprüche, dadurch gekennzeichnet, daß eine dritte Verknüpfungsschaltung (VTR) vorgesehen ist, durch welche ein Steuersignal $u_{TR}$ gebildet wird, das zusammen mit dem Steuersignal $u_{TI}$ aus der ersten Verknüpfungsschaltung (VTI) ein komplexes Steuersignal $u_T$ für den Taktgenerator bildet (Figuren 4, 5, 6, 7a).

8. Taktphasendetektor nach den Ansprüchen 7 und 5 oder 6, dadurch gekennzeichnet, daß durch die dritte Verknüpfungsschaltung (VTR) die Ausgangssignale rx, ix, ry und iy der beiden Bandpässe (BP+, BP+; BP$_\mu$, BP$_I$) nach der Beziehung

$$u_{TR} = rx^2 - ix^2 - ry^2 - iy^2$$

zusammengefaßt werden (Figur 5b).

## Claims

1. A timing error detector for clock pulse synchronisation in a receiver for synchronous data transmission, wherein the lowpass filtered inphase component and the quadrature component, both generated from the product of the received signal with the output signal of the carrier oscillator, are fed to the timing error detector as the demodulated received signal, with the signal terms of the double frequency being suppressed in said components; the output signal serves as control signal U$_{TI}$ for the clock pulse generator; and the timing error detector includes two bandpass filters (BP+) to which is fed the demodulated received signal and a combining unit (VTI) which generates the control signal from the complex bandpass filter output signals, characterised in that a second combining unit (VF) is provided which generates from the complex output values of the bandpass filters (BP+) a control signal u$_f$ to control the frequency of the carrier oscillator (Figure 4).

2. A timing error detector according to claim 1, characterised in that a pre-equaliser (VE) in which the demodulated received signal (x, y) is pre-equalised is provided ahead of each bandpass filter (BP+) (Figure 6).

3. A timing error detector according to claim 2, characterised in that the pre-equalisers (VE) generate complex output signals (Figure 7c).

4. A timing error detector according to claim 2 or 3, characterised in that each one of the series connections of the pre-equaliser (VE) and subsequent bandpass filters (BP+) is realized by a single complex filter (BP$_\mu$, BP$_I$) (Figure 7a).

5. A timing error detector according to one of claims 1 to 4, wherein the bandpass filters each have a center frequency f$_M$ which is equal to the Nyquist frequency f$_{Nyq}$ and a frequency range approximately equal to or less than the width of the Nyquist edge, wherein the Nyquist frequency is f$_{Nyq}$ = 1/2 T$_S$ with a step duration T$_S$ for the transmitted symbols; and the one bandpass filter (BP+) is fed with the real component x(t) while the other bandpass filter (BP+) is fed with the imaginary component y(t) of the demodulated received signal, characterised in that the linkage of the second combining unit (VF) combines, for frequency control, the output signals rx, ix, ry and iy of the bandpass filters (BP+) according to the equation

$$u_f = ry \cdot ix - rx \cdot iy$$

(Figure 5a).

6. A timing error detector according to claim 5, characterised in that the linkage of the first combining unit (VTI) combines the output signals rx, ix, ry and iy of the bandpass filters (BP+) according to the equation

$$u_{TI} = (rx \cdot ix + ry \cdot iy) \cdot 2$$

(Figure 5c).

7. A timing error detector according to one of the preceding claims, characterised in that a third combining unit (VTR) is provided which forms a control signal u$_{TR}$ that, together with the control signal u$_{TI}$ from the first combining unit (VTI), forms a complex control signal u$_T$ for the clock pulse generator (Figures 4, 5, 6, 7a).

8. A timing error detector according to claims 7 and 5 or 6, characterised in that the third combining unit (VTR) combines the output signals rx, ix, ry and iy of the two bandpass filters (BP+, BP+; BP$_\mu$, BP$_I$) according to the equation

$$u_{TR} = rx^2 - ix^2 - ry^2 - iy^2$$

(Figure 5b).

## Revendications

1. Détecteur de phase du signal d'horloge pour la synchronisation de l'horloge dans un récepteur destiné à la transmission synchrone de données, dans laquelle la composante en phase et la composante en quadrature, ayant été soumises à un filtrage passe-bas, sont introduites en tant que signal de réception démodulé dans le détecteur de phase du signal d'horloge, composantes dans lesquelles les termes de signal de la fréquence double sont supprimés et qui sont formées du produit du signal de réception et du signal de sortie de l'oscillateur de la porteuse, le signal de sortie servant de signal de commande $u_{TI}$ pour le générateur d'horloge et le détecteur de phase du signal d'horloge contenant deux filtres passe-bas (BP+) alimentés avec le signal de réception démodulé et un circuit combinatoire (VTI) qui génère le signal de commande à partir des signaux de sortie complexes des filtres passe-bande, caractérisé

en ce qu'un deuxième circuit combinatoire (VF) est prévu, par lequel est généré, à partir des grandeurs de sortie complexes des filtres passe-bande (BP+) un signal de commande $u_f$ pour commander la fréquence de l'oscillateur de la porteuse (figure 4).

2. Détecteur de phase du signal d'horloge selon la revendication 1, caractérisé en ce qu'un dispositif de précorrection (VE) est prévu devant les filtres passe-bande (BP+), dispositif par lequel le signal de réception démodulé (x, y) est précorrigé (figure 6).

3. Détecteur de phase du signal d'horloge selon la revendication 2, caractérisé en ce que les dispositifs de précorrection (VE) génèrent des signaux de sortie complexes (figure 7c).

4. Détecteur de phase du signal d'horloge selon la revendication 2 ou 3, caractérisé en ce que les montages en série formés d'un dispositif de précorrection (VE) et d'un filtre passe-bande consécutif (BP+), sont réalisés chaque fois sous la forme d'un seul filtre complexe ($BP_\mu$, $BP_I$) (figure 7a).

5. Détecteur de phase du signal d'horloge selon une des revendications 1 à 4, dans lequel les filtres passe-bande présentent une fréquence centrale $f_M$ égale à la fréquence de Nyquist $f_{Nyq}$, avec une bande de fréquences correspondant approximativement ou inférieure à la largeur du flanc de Nyquist, la fréquence de Nyquist $f_{Nyq} = 1/2\ T_S$, étant entendu que $T_S$ est la durée de pas des symboles d'émission, l'un des filtres passe-bande (BP+) étant alimenté avec la partie réelle x(t) et l'autre filtre passe-bande (BP+) étant alimenté avec la partie imaginaire y(t) du signal de réception démodulé, caractérisé

en ce que l'enchaînement réalisé par le deuxième circuit combinatoire (VF) pour la commande de la fréquence, réunit les signaux de sortie rx, ix, ry et iy des filtres passe-bande (BP+) selon la relation

$$u_f = ry \cdot ix - rx \cdot iy \qquad \text{(figure 6a)}.$$

6. Détecteur de phase du signal d'horloge selon la revendication 5, caractérisé en ce que l'enchaînement réalisé par le premier circuit combinatoire (VTI) réunit les signaux de sortie rx, ix, ry et ix des filtres passe-bande (BP+) selon la relation

$$u_{TI} = (rx \cdot ix = ry \cdot iy) \cdot 2 \qquad \text{(figure 5c)}.$$

7. Détecteur de phase du signal d'horloge selon une des revendications précédentes, caractérisé en ce qu'un troisième circuit combinatoire (VTR) est prévu, par lequel est formé un signal de commande $u_{TR}$ qui, ensemble avec le signal de commande $u_{TI}$ provenant du premier circuit combinatoire (VTI), forme un signal de commande complexe $u_T$ pour le générateur d'horloge (figures 4, 5, 6, 7a).

8. Détecteur de phase du signal d'horloge selon les revendications 7 et 5 ou 6, caractérisé en ce que le troisième circuit combinatoire (VTR) réunit les signaux de sortie rx, ix, ry et iy des deux filtres passe-bande (BP+, BP+; $BP_\mu$, $BP_I$) selon la relation

$$u_{TR} = rx^2 - ix^2 - ry^2 - iy^2 \qquad \text{(figure 5b)}.$$

FIG. 1

FIG. 2

# FIG. 3a

# FIG.3b

FIG. 4

FIG. 6

FIG. 5a

FIG. 5b

FIG. 5c

FIG. 7a

FIG. 7b

FIG. 7c